# EUROPÄISCHE PATENTSCHRIFT

(11) **EP 3 147 017 B1**
(45) Veröffentlichungstag und Bekanntmachung des Hinweises auf die Patenterteilung: **04.03.2020**
(21) Anmeldenummer: 16180123.8
(22) Anmeldetag: 19.07.2016
(51) Int. Cl.: B01D 36/00, B01D 29/11

(54) **BRENNSTOFFFILTER**
FUEL FILTER
FILTRE A CARBURANT

(30) Priorität: 25.09.2015 DE 102015116312
(43) Veröffentlichungstag der Anmeldung: 29.03.2017
(73) Patentinhaber: Valeo Thermal Commercial Vehicles Germany GmbH, 82205 Gilching (DE)
(72) Erfinder: Soppa, Nico, 17033 Neubrandenburg (DE)
(74) Vertreter: Strasser, Wolfgang

(56) Entgegenhaltungen:
- EP-A1- 0 547 951
- WO-A1-92/20425
- DE-A1- 19 616 493
- DE-U1- 9 315 839

## Beschreibung

Die Erfindung betrifft einen Brennstofffilter der im Oberbegriff von Anspruch 1 genannten Art.

In Heizgeräten, wie sie in Kraftfahrzeugen zum Vorwärmen des Motors (insbesondere bei Dieselfahrzeugen) und/oder zum Heizen des Fahrgastraumes zum Einsatz kommen, werden zur Wärmegewinnung häufig flüssige Brennstoffe verbrannt. In Kraftfahrzeugen handelt es sich bei diesem Brennstoff im Allgemeinen um den auch zum Betrieb des Fahrzeugs verwendeten Kraftstoff. Im vorliegenden Zusammenhang werden die Ausdrücke "Brennstoff" und "Kraftstoff" daher als gleichwertige Synonyme verwendet.

In der Praxis wird der Brennstoff üblicherweise dadurch aus einem Vorratstank über eine Saugleitung mithilfe wenigstens einer Pumpe zum Heizgerät gefördert, dass die Pumpe saugseitig einen Unterdruck erzeugt, dessen Höhe von zahlreichen Faktoren, wie zum Beispiel der Länge der Saugleitung, den im Strömungsweg des Brennstoffes liegenden Komponenten (inklusive Brennstofffilter), der Pumpendrehzahl, der Viskosität des geförderten Brennstoffs usw. abhängig ist.

Undichtigkeiten im Brennstoffsystem können ebenso zum Auftreten von Gasblasen führen, wie deren direkte Ansaugung aus dem Vorratstank oder ein Verdampfen bzw. Ausgasen des Brennstoffs, das auftritt, wenn der von der Pumpe erzeugte Unterdruck im Betrieb bestimmte Werte übersteigt.

Aus der Druckschrift EP 0 547 951 A1 ist ein Brennstofffilter bekannt, der einen mit dem Filtertopf in lösbarer Weise verbundenen Filterkopf umfasst, in dem sowohl der Zuflusskanal als auch der Abflusskanal für den Brennstoff ausgebildet ist. Unter der Saugwirkung einer nicht dargestellten, stromabwärts vom Brennstofffilter angeordneten Pumpe tritt der Brennstoff durch den als zunächst horizontal verlaufende und dann im rechten Winkel abknickende Bohrung ausgebildeten Zuflusskanal in den Innenhohlraum des Filtergehäuses ein, um die Filterpatrone von ihrer Außenseite her zu umströmen und radial durch sie hindurch in einen innenliegenden Hohlraum einzutreten. In diesem ist ein als Zwischenwandung bezeichnetes, einen Bestandteil der Filterpatrone bildendes Steigrohr angeordnet, das in etwa den gleichen Durchmesser wie der im Filterkopf ausgebildete Abflusskanal aufweist. Um im Inneren des Brennstofffilters angesammelte große Gasblasen zu zerteilen, damit diese nicht von der Pumpe angesaugt werden und zu einem Zusammenbruch des Brennstoffdrucks auf der Ausgangsseite der Pumpe führen, weist die bekannte Einrichtung einen das Steigrohr konzentrisch umgebenden, als Luftkammer bezeichneten Gassammelraum auf, der an seinem dem Filterkopf zugewandten Ende verschlossen ist und in den der Brennstoff nach Durchströmen der Filterpatrone eintreten muss, bevor er von unten her in das Steigrohr gelangen kann. In der Nähe des verschlossenen, oberen Endes des Gassammelraums besitzt das Steigrohr eine Radialbohrung mit kleinem Durchmesser, die seinen Innenraum mit dem Gassammelraum verbindet und durch welche Gas, das sich im oberen Bereich des Gassammelraums angesammelt hat, nur in Form kleiner Bläschen hindurchtreten und in den Abflusskanal gelangen kann, um durch diesen dann zur Pumpe hin abgeführt zu werden.

Gleiches gilt auch für die aus der DE 93 15 839 U1 und DE 196 16 493 A1 bekannten Filteranordnungen.
Die durch die Erfindung weiterzubildenden, aus dem Stand der Technik bekannten Brennstofffilter umfassen einen Filterkopf und einen mit diesem in lösbarer Weise verbundenen Filtertopf, in dem sich ein Filterelement befindet. Im Filterkopf sind ein Zufluss- und ein Abflusskanal für den Brennstoff ausgebildet, von denen ersterer mit einem Vorratstank und letzterer mit einer Pumpe für den Brennstoff verbunden ist. Dieser strömt unter der Saugwirkung der Pumpe aus dem Tank zum Zuflusskanal und tritt aus diesem von oben her in den Filtertopf ein und durchströmt das dort befindliche, die Form eines dickwandigen Hohlzylinders aufweisende Filterelement von außen nach innen. In den Innenhohlraum des Filterelementes ragt ein Steigrohr hinein, in dessen unteres Ende der gefilterte Brennstoff eintritt um dann durch das obere, mit dem Filterkopf verbundene Ende des Steigrohres in den Abflusskanal zu gelangen und zur Pumpe weiter zu fließen.
Werden Brennstofffilter dieser Bauform verwendet, so besteht die Gefahr, dass große Gasblasen in die Pumpe gelangen, wodurch es zu einem Zusammenbruch des Brennstoffdrucks auf der Druckseite der Pumpe und einem Aussetzen der Verbrennung kommen kann. Heizgeräte mit elektronischen Steuereinrichtungen verriegeln dann oftmals und es ist zunächst kein weiterer Heizbetrieb mehr möglich.
Zur Lösung dieses Problems wird gemäß dem Stand der Technik häufig auf zusätzliche Apparaturen zur automatischen Entlüftung des angesagten Brennstoffs zurückgegriffen_(zum Beispiel Tigerloop). Auch kann bezüglich der Brennstoffleitungen von Zweistrang- zu Einstrangsystemen übergegangen werden, die teilweise als Bypass zwischen Rücklaufleitung und Saugleitung ausgeführt sind. Eine weitere Möglichkeit besteht darin, Vorförderpumpen einzusetzen, die das Unterdruckniveau in der Saugleitung wieder anheben.

Nachteilig an diesen bekannten Abhilfemaßnahmen ist, dass zusätzliche Komponenten verwendet werden müssen, die einen erhöhten Kostenaufwand bedingen.
Demgegenüber liegt der Erfindung die Aufgabe zugrunde, einen Brennstofffilter der oben genannten Art so weiterzubilden, dass ein Zusammenbruch des Brennstoffdruckes auf der Druckseite der Brennstoffpumpe vermieden, bzw. in seiner Häufigkeit erheblich verringert wird, ohne dass hierfür aufwendige zusätzliche Komponenten wie zum Beispiel externe Entlüftungseinrichtungen erforderlich sind.
Zur Lösung dieser Aufgabe sieht die Erfindung die im Anspruch 1 zusammengefassten Merkmale vor.
Zwar ist aus der WO 92/20425 A1 ein Fluid-Filter bekannt, bei dem sich der Strömungsweg des Fluids von einem in einem Filterkopf ausgebildeten Zuflusskanal durch den Filtertopf und das in diesem befindliche Filterelement hindurch bis zu einem Abflusskanal erstreckt, wobei ein in das Filterelement hineinragendes Steigrohr vorhanden ist, das an seinem dem Abflusskanal zugewandten Ende eine Verengung aufweist.

Dadurch, dass gemäß der Erfindung im Steigrohr unmittelbar an dessen in den Innenhohlraum des Filterelements hineinragenden Ende ein Verengungsabschnitt geschaffen wird, der sich zumindest über einen Teil der vom brennstoffdurchströmten Länge des Steigrohres erstreckt, können Gasblasen, die sich in der Nut des Filterkopfes und/oder im oberen Bereich des Filterelementes angesammelt und eine kritische Größe erreicht haben, nicht bis zum Abflusskanal und darüber hinaus zur Pumpe gelangen. Vielmehr werden sie durch den Verengungsabschnitt bereits am Strömungseingang des Steigrohres in kleine Bläschen aufgeteilt, die mit dem Brennstoff abgesaugt werden können, ohne dass es zu einem Zusammenbruch des Brennstoffdrucks am Heizgerät und damit zu einer Unterbrechung oder gar einem Ausfall des Heizbetriebes kommt.
Die in der Praxis verwendeten Steigrohre haben im Allgemeinen einen kreisförmigen Querschnitt. Die Erfindung ist hierauf aber nicht beschränkt. Auch bei ovalen oder durch einen Polygonzug begrenzten (dreieckigen, viereckigen usw.) Querschnitten kann gemäß der Erfindung durch das Vorsehen eines Verengungsabschnittes erreicht werden, dass im Filtergehäuse entstandene große Gasblasen beim Eintritt in das Steigrohr so zerkleinert werden, dass sie keinen Betriebsausfall des nachfolgenden Heizgerätes mehr verursachen können. Um eine einheitliche Aussage bezüglich der erfindungsgemäß vorzunehmenden Verengung des Steigrohrs zu ermöglichen, werden für Querschnitte, die von der Kreisform abweichen, zu Kreisflächen äquivalente Größenwerte angegeben, deren Umrechnung auf die jeweilige tatsächliche Querschnittsform im Allgemeinen ohne weiteres möglich ist. Bei komplizierten Querschnitten kann das den angegebenen Kreisflächengrößen entsprechende Äquivalent auch durch einfache Versuche ermittelt werden.

Somit liegt die Größe der Querschnittsfläche des Verengungsabschnittes vorzugsweise in einem Bereich, der der Größe einer Kreisfläche mit einem Durchmesser von 0,2 cm bis 0,7 cm entspricht, in stärker bevorzugter Weise in einem Bereich, der der Größe einer Kreisfläche mit einem Durchmesser von 0,3 cm bis 0,6 cm entspricht und in besonders bevorzugter Weise in einem Bereich, der der Größe einer Kreisfläche mit einem Durchmesser von 0,4 cm bis 0,5 cm entspricht.

Wie man sieht, wird im Vergleich zum Stand der Technik, bei welchem dieser Durchmesser etwa 1 cm ist, durch die Erfindung eine erhebliche Querschnittsverminderung bzw. Verengung vorgenommen. Generell lässt sich sagen, dass die Querschnittsfläche so klein wie möglich gewählt werden sollte, ohne dass hierdurch die Förderleistung der Pumpe zu sehr beeinträchtigt wird.

Die erfindungsgemäßen Maßnahmen führen zu einem wesentlich sichereren Heizbetrieb als mit Brennstofffiltern bzw. Steigrohren möglich ist, die dem Stand der Technik entsprechen, und es ergibt sich neben der Vermeidung von zur Entlüftung dienenden Zusatzkomponenten ein weiterer Kostenvorteil daraus, dass weniger Wartungseinsätze erforderlich sind, um ein Heizgerät, das sich automatisch abgeschaltet hat, wieder in Betrieb zu nehmen.

Besonders geringe Kosten entstehen vor allem dann, wenn das Steigrohr selbst mit verengtem Innendurchmesser ausgebildet wird, weil dann keinerlei zusätzlichen Komponenten benötigt werden. Aber auch in dem Fall, dass ein in das Steigrohr eingesetztes Verengungselement zum Einsatz kommt, ist dieses erheblich kostengünstiger als die bisher für eine Entlüftung verwendeten Zusatzkomponenten.

Ein besonderer Vorteil der Erfindung ist darin zu sehen, dass die nach dem Stand der Technik üblichen sonstigen Abmessungen der Filterköpfe und der Steigrohre beibehalten werden können, wodurch weiterhin die Verwendung von marktüblichen Brennstofffiltern möglich ist, bei denen lediglich der Filterkopf mit dem nicht verengten Steigrohr durch einen gemäß der Erfindung weitergebildeten Filterkopf ersetzt wird. Auch gibt es Filterköpfe und Steigrohre, die durch eine Verschraubung miteinander verbunden sind. In diesem Fall kann dann lediglich das dem Stand der Technik entsprechende, nicht verengte Steigrohr durch ein erfindungsgemäßes Steigrohr ersetzt werden. In jedem Fall kann ein schneller Austausch vor Ort erfolgen, wenn ein bereits im Einsatz befindlicher Brennstofffilter gemäß der Erfindung umgerüstet werden soll.

Diese und andere vorteilhafte Weiterbildung eines erfindungsgemäßen Brennstofffilters sind in den Unteransprüchen niedergelegt.

Die Erfindung wird im Folgenden anhand eines Ausführungsbeispiels unter Bezugnahme auf die Zeichnung beschrieben; in dieser zeigen:
- Fig.1: einen stark schematisierten Vertikalschnitt durch einen dem Stand der Technik entsprechendes Brennstofffilter und
- Fig. 2: einen dem Schnitt in Fig. 1 entsprechenden Vertikalschnitt durch einen erfindungsgemäß modifizierten Brennstofffilter.

Die in den Figuren dargestellten Brennstofffilter sind nicht maßstabsgetreu wiedergegeben. In beiden Figuren sind einander entsprechende Teile mit den gleichen Bezugszeichen bezeichnet. Die für die erwähnten Schraubverbindungen erforderlichen Gewinde sind der Übersichtlichkeit halber nicht dargestellt. Wenn im vorliegenden Zusammenhang Begriffe wie "horizontal", "vertikal", "unten", "oben" usw. gebraucht werden, so beziehen sich diese ausschließlich auf die relative Lage bzw. den relativen Verlauf der so bezeichneten Teile in den Figuren und sind nicht einschränkend für deren Verlauf bzw. Lage im Betriebszustand zu verstehen.

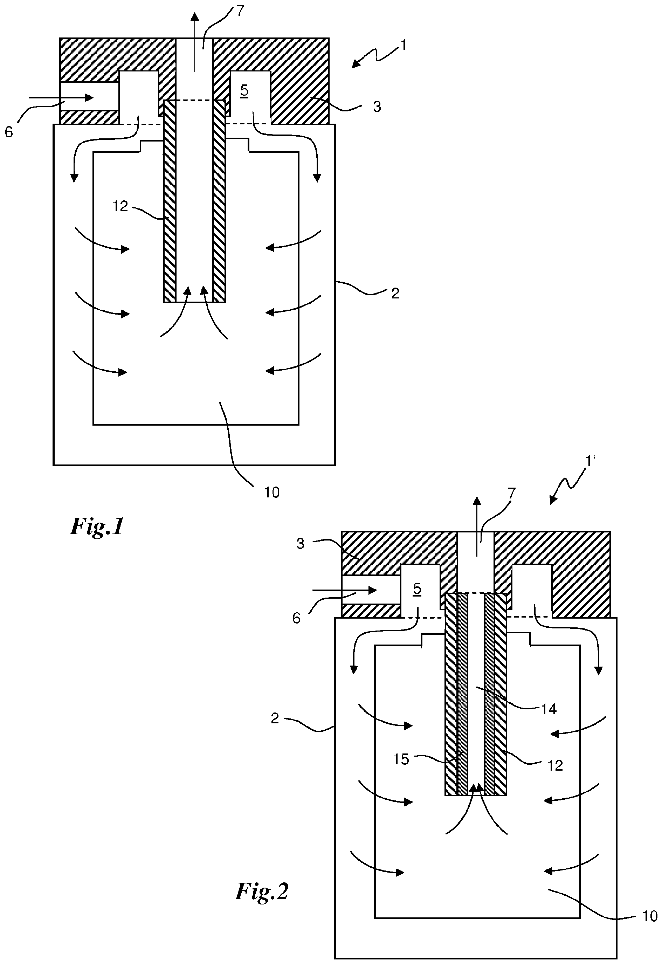

Der in Fig. 1 gezeigte Brennstofffilter 1 umfasst ein becherförmiges Filtergehäuse 2, das in herkömmlicher Weise, beispielsweise durch Verschrauben, mit einem Filterkopf 3 verbunden ist, der das oben offene Filtergehäuse 2 dicht verschließt. Im Inneren des Filterkopfes 3 ist eine in Umfangsrichtung umlaufende, zum Filtergehäuse 2 hin offene Nut 5 ausgebildet. Die in den Figuren hinter der Zeichenebene liegende Oberkante des Filtergehäuses 2 ist im Bereich dieser Nut 5 durch eine gestrichelte Linie dargestellt, um deutlich zu machen, dass eine freie Strömungsverbindung zwischen den Innenraum der Nut 5 und dem Innenraum des Filtergehäuses 2 besteht.

Der Filterkopf 3 weist einen in den Figuren horizontal verlaufenden, als bis zur Nut 5 durchgehende Bohrung ausgeführten Zuflusskanal 6 und einen vertikalen, als durchgehende Bohrung ausgeführten Abflusskanal 7 auf, die ebenfalls durch Verschrauben mit einer nicht dargestellten Zuführ- bzw. einer ebenfalls nicht dargestellten Abführ-Leitung für den zu filternden Brennstoff verbunden werden können. Zu diesem Zweck besitzen sowohl der Zuflusskanal 6 als auch der Abflusskanal 7 einen kreiszylindrischen Querschnitt mit marktüblichem Durchmesser, um in den verschiedensten Anwendungsfällen zu den ebenfalls genannten Zuführ- bzw. Abführ-Leitungen zu passen.

Wie man sieht, mündet der Zuflusskanal 6 in die ringförmige Nut 5, die dazu dient, den zuströmenden Brennstoff in Umfangsrichtung im Wesentlichen gleichmäßig zu verteilen und ihn von oben her dem Innenraum des Filtergehäuses 2 zuzuführen.

In das Filtergehäuse 2 ist ein Filterelement 10 eingesetzt, dass im Wesentlichen die Form eines dickwandigen Hohlzylinders besitzt. Ein Steigrohr 12 ist an seinem oberen Ende mit dem Filterkopf 3 beispielsweise durch Verschrauben so verbunden, dass sein Innenhohlraum in den Abflusskanal 7 mündet; die Grenze zwischen dem oberen Ende des Steigrohres 12 und dem Abflusskanal 7 ist durch eine gestrichelte Linie dargestellt. Der Abflusskanal 7 und das Steigrohr 12 besitzen in etwa den gleichen Durchmesser.
Das Steigrohr 12, dessen Innendurchmesser beim Stand der Technik typischer Weise 10 mm oder mehr beträgt, ragt von oben her in das Filterelement 10 so weit hinein, dass es sich nur über einen Teil der Höhe des Filterelementes 10 erstreckt.
Wie durch die Strömungspfeile dargestellt, tritt somit der vom Zuflusskanal 6 in die ringförmige Nut 5 einströmende Brennstoff aus dieser nach unten in das Filtergehäuse 2 aus, wo er in etwa gleichmäßig über die äußere Mantelfläche des Filterelementes 10 verteilt in dieses hinein und zu dessen Innenhohlraum strömt. Dabei wird er gefiltert und verlässt dann den Innenhohlraum des Filterelementes 10 über das Steigrohr 12, um schließlich durch den Abflusskanal 7 aus dem Brennstofffilter 1 abgesaugt zu werden.
Bei einem solchen, dem Stand der Technik entsprechenden Brennstofffilter 1 können sich die eingangs erwähnten, gasförmigen Bestandteile in der Nut 5 des Filterkopfes 3 und/oder im Filterelement 10 ansammeln, sodass es, weil sie nicht nach oben entweichen können, zu einem Absinken des Brennstoffpegels im Filterelement 10 kommt. Fällt dieser Pegel unter das untere Ende des Steigrohres 12 ab, kann plötzlich eine große Gasblase in dessen Innenhohlraum eintreten und von der Brennstoffpumpe anstelle des Brennstoffes angesaugt werden, was dann zu dem bereits erwähnten Ausfallen des Heizbetriebes führen kann.
Bei dem in Fig. 2 dargestellten, erfindungsgemäßen Brennstofffilter 1' ist der Durchmesser des Innenhohlraums des Steigrohres 12 gegenüber dem Innendurchmesser des Abflusskanals 7 deutlich verringert, d.h. der dem Brennstoff zur Verfügung stehende, aus dem Filterelement 10 heraus führende Strömungsweg weist über eine vorgebbare Länge einen Verengungsabschnitt 14 auf, der im dargestellten Fall mithilfe eines in das Steigrohr 12 eingesetzten Verengungsrohres 15 erzeugt ist, dessen Länge gleich der Länge des Steigrohres 12 und dessen Außendurchmesser gleich dem Innendurchmesser des Steigrohres 12 ist, während sein Innendurchmesser etwas weniger als die Hälfte des Innendurchmesser des Steigrohres 12 beträgt.
Alternativ zu der gezeigten Ausführungsform kann das Verengungsrohr 15 auch kürzer als das Steigrohr 12 ausgebildet sein. Auch muss es nicht notwendigerweise mit dem oberen Ende des Steigrohres 12 abschließen. Das vertikal untere Ende des Verengungsabschnitts 14 fällt mit dem unteren Ende des Steigrohres 12 zusammen, befindet sich zumindest in dessen unmittelbarer Nähe.

Eine weitere Alternative besteht darin, den Verengungsabschnitt 14 des Strömungswegs nicht mithilfe eines gesonderten Verengungsrohres 15 sondern dadurch auszubilden, dass das Steigrohr 12 einen gegenüber den dem Stand der Technik entsprechenden Steigrohren verengten Innendurchmesser aufweist. Bei unverändertem Durchmesser der Aufnahmevertiefung im Filterkopf, in welche das obere Ende des Steigrohres 12 eingeführt ist, d.h. bei gleich bleibendem Außendurchmesser des Steigrohres 12 bedeutet letzteres, dass das Steigrohr 12 eine entsprechend größere Wandstärke aufweist.

Der Durchmesser des im Strömungsweg erfindungsgemäß vorgesehenen Verengungsabschnitts 14 und seine axiale Länge können innerhalb weiter Grenzen gewählt und an die jeweilige Anwendungssituation angepasst werden. Eine Grenze für den Querschnitt und die Länge des Verengungsabschnittes 14 ist lediglich durch das Erfordernis gegeben, den Strömungswiderstand für den von der Brennstoffpumpe angesagten Brennstoff nicht so stark zu erhöhen, dass die Förderleistung der Pumpe merklich absinkt, und/oder dass der Unterdruck im Brennstoffsystem derart erhöht wird, dass ein verstärktes Ausgasen des Brennstoffs auftritt.

Weiterhin müssen insbesondere der Zuflusskanal 6, der Abflusskanal 7 und das Steigrohr 12 nicht notwendigerweise einen kreiszylindrischen Querschnitt aufweisen. Ihr Querschnitt kann auch oval oder als Polygon ausgebildet sein.

Wesentlich ist, dass der Verengungsabschnitt 14 das Übertreten zu großer Gasblasen aus dem Filterelement 10 in das Steigrohr 12 und deren Weiterleitung zum Heizgerät verhindert. Stattdessen erfolgt eine Zerteilung von im Filterelement 10 möglicherweise angesammelten größeren Gasblasen in viele kleine Bläschen, die sich mit dem gleichzeitig geförderten Brennstoff vermischen und keine Brennstörungen des Heizgerätes bewirken können.

## Patentansprüche

1. Brennstofffilter (1'), der einen Filterkopf (3) und einen mit diesem in lösbarer Weise verbundenen Filtertopf (2) umfasst, in welchem sich ein Filterelement (10) befindet, und bei dem im Filterkopf (3) sowohl der Zuflusskanal (6) als auch der Abflusskanal (7) für den Brennstoff ausgebildet ist, sodass sich dessen Strömungsweg vom Zuflusskanal (6) im Filterkopf (3) durch den Filtertopf (2) und das in diesem befindliche Filterelement (10) hindurch zum Abflusskanal (7) erstreckt, wobei ein in das Filterelement (10) hineinragendes Steigrohr (12) und eine Einrichtung zum Zerteilen von sich im Inneren des Brennstofffilters (1') ansammelnden Gasblasen vorgesehen sind, wobei das Filterelement in etwa hohlzylindrisch mit einem zentralen, sich über seine gesamte Höhe erstreckenden Innenhohlraum ausgebildet ist, in den das Steigrohr (12) hineinragt,
**dadurch gekennzeichnet,**
**dass** das Steigrohr (12) an seinem dem Filterkopf (3) zugewandten Ende mit diesem so verbunden ist, dass sein Innenhohlraum in den Abflusskanal (7) mündet, und
**dass** die Einrichtung zum Zerteilen von Gasblasen ausschließlich von einem im Inneren des Steigrohres (12) vorgesehenen Verengungsabschnitt (14) gebildet ist, der folgende Merkmale aufweist:
- er verringert den Durchmesser des Innenhohlraums des Steigrohres (12) gegenüber dem Innendurchmesser des Abflusskanals (7),
- er beginnt unmittelbar an dem in den Innenhohlraum des Filterelements (10) hineinragenden Ende des Steigrohres (12),
- er erstreckt sich zumindest über einen Teil der vom Brennstoff durchströmten Länge des Steigrohres (12) und
- er umfasst eine Querschnittsfläche, deren Größe nicht größer als die einer Kreisfläche mit einem Durchmesser von 0,9 cm ist.

2. Brennstofffilter (1') nach Anspruch 1, **dadurch gekennzeichnet, dass** die Größe der Querschnittsfläche des Verengungsabschnittes (14) der Größe einer Kreisfläche entspricht, deren Durchmesser in einem Bereich von 0,2 cm bis 0,7 cm liegt.

3. Brennstofffilter (1') nach Anspruch 1, **dadurch gekennzeichnet, dass** die Größe der Querschnittsfläche des Verengungsabschnittes (14) der Größe einer Kreisfläche entspricht, deren Durchmesser in einem Bereich von 0,3 cm bis 0,6 cm liegt.

4. Brennstofffilter (1') nach Anspruch 1, **dadurch gekennzeichnet, dass** die Größe der Querschnittsfläche des Verengungsabschnittes (14) der Größe einer Kreisfläche entspricht, deren Durchmesser in einem Bereich von 0,4 bis 0,5 cm liegt.

5. Brennstofffilter (1') nach einem der vorhergehenden Ansprüche, **dadurch gekennzeichnet, dass** sich der Verengungsabschnitt (14) über die gesamte vom Brennstoff durchströmte Länge des Steigrohres (12) erstreckt.

6. Brennstofffilter (1') nach einem der vorhergehenden Ansprüche, **dadurch gekennzeichnet, dass** der Verengungsabschnitt (14) durch eine entsprechende Wahl des Innendurchmessers zumindest eines Abschnittes der Länge des Steigrohres (12) gebildet ist.

7. Brennstofffilter (1') nach einem der Ansprüche 1 bis 5, **dadurch gekennzeichnet, dass** der Verengungsabschnitt mithilfe eines in das Steigrohr (12) eingesetzten Verengungselementes realisiert ist.

8. Brennstofffilter (1') nach Anspruch 7, **dadurch gekennzeichnet, dass** das Verengungselement ein in das Steigrohr (12), eingesetztes Verengungsrohr (15) ist, dessen Außendurchmesser gleich dem Innendurchmesser des Steigrohres (12) ist.

## Claims

1. Fuel filter (1'), which comprises a filter head (3) and a filter bowl (2) which is detachably connected thereto and in which a filter element (10) is located, wherein in the filter head (3) an inflow channel (6) as well as an outflow channel (7) for the fuel are formed, so that the flow path of the fuel extends from the inflow channel (6) in the filter head (3), through the filter bowl (2) and through the filter element (10) located therein to the outflow channel (7), and wherein a riser pipe (12) projecting into the filter element (10) and an arrangement for dividing gas bubbles accumulating in the interior of the fuel filter (1') are further provided, the filter element being in the form of an approximately hollow cylinder which is provided with an inner cavity extending over its entire height into which the riser pipe (12) protrudes,
**characterized**
**in that** the riser pipe (12), at its end facing the filter head (3), is connected thereto such that its internal bore opens into the outflow channel (7),
**in that** the arrangement for dividing gas bubbles is formed exclusively by a restriction section (14) provided in the interior of the riser pipe (12) and
**in that** said arrangement for dividing gas bubbles has the following features:
- it reduces the diameter of the inner bore of the riser pipe (12) compared to the inner diameter of the outflow channel (7),
- it begins directly at the end of the riser pipe (12) projecting into the inner cavity of the filter element (10),
- it extends at least over part of the length of the riser pipe (12) through which the fuel flows, and
- it comprises a cross-sectional area, the size of which is no larger than a circular area with a diameter of 0.9 cm.

2. Fuel filter (1') according to claim 1, **characterized in that** the size of the cross-sectional area of the restriction section (14) corresponds to the size of a circular area whose diameter is in a range from 0.2 cm to 0.7 cm.

3. Fuel filter (1') according to claim 1, **characterized in that** the size of the cross-sectional area of the restriction section (14) corresponds to the size of a circular area whose diameter is in a range from 0.3 cm to 0.6 cm.

4. Fuel filter (1') according to claim 1, **characterized in that** the size of the cross-sectional area of the restriction section (14) corresponds to the size of a circular area whose diameter is in a range from 0.4 to 0.5 cm.

5. Fuel filter (1') according to one of the preceding claims, **characterized in that** the restriction section (14) extends over the entire length of the riser pipe (12) through which the fuel flows.

6. Fuel filter (1') according to any one of the preceding claims, **characterized in that** the restriction section (14) is formed by correspondingly dimensioning the inner diameter of at least a section of the length of the riser pipe (12).

7. The fuel filter (1') according to one of claims 1 to 5, **characterized in that** the constriction section is realized with the aid of a constriction element inserted into the riser pipe (12).

8. Fuel filter (1') according to claim 7, **characterized in that** the constriction element is a restriction pipe (15) inserted into the riser pipe (12), the outside diameter of said restriction pipe (15) being equal to the inside diameter of the riser pipe (12).

## Revendications

1. Filtre à combustible (1'), qui comprend une tête filtrante (3) et un pot filtrant (2) relié à celle-ci de manière détachable, dans lequel se trouve un élément filtre (10), et où aussi bien le canal d'admission (6) que le canal d'écoulement (7) pour le combustible est réalisé dans la tête filtrante (3), de sorte que la voie d'écoulement de celui-ci s'étend à partir du canal d'admission (6) dans la tête filtrante (3) à travers le pot filtrant (2) et l'élément filtre (10) se trouvant dans celui-ci vers le canal d'écoulement (7), dans lequel un tuyau montant (12) faisant saillie à l'intérieur de l'élément filtre (10) et un dispositif de division de bulles de gaz s'accumulant à l'intérieur du filtre à combustible (1') sont prévus, dans lequel l'élément filtre est réalisé à peu près de manière cylindrique creuse avec une cavité intérieure centrale s'étendant sur toute sa hauteur, à l'intérieur de laquelle le tuyau montant (12) fait saillie,
**caractérisé en ce**
**que** le tuyau montant (12) est relié par son extrémité tournée vers la tête filtrante (3) à celle-ci, de sorte que sa cavité intérieure débouche dans le canal d'écoulement (7), et
**que** le dispositif destiné à diviser des bulles de gaz est formé exclusivement d'une partie de rétrécissement (14) prévue à l'intérieur du tuyau montant (12), qui présente les caractéristiques suivantes :
- elle réduit le diamètre de la cavité intérieure du tuyau montant (12) par rapport au diamètre intérieur du canal d'écoulement (7),
- elle débute directement à l'extrémité du tuyau montant (12) faisant saillie à l'intérieur de la cavité intérieure de l'élément filtre (10),
- elle s'étend au moins sur une partie de la longueur du tuyau montant (12) traversée par le combustible et
- elle comprend une surface de section transversale dont la taille n'est pas supérieure à celle d'une surface circulaire avec un diamètre de 0,9 cm.

2. Filtre à combustible (1') selon la revendication 1, **caractérisé en ce que** la taille de la surface de section transversale de la partie de rétrécissement (14) correspond à la taille d'une surface circulaire dont le diamètre se situe dans une plage de 0,2 cm à 0,7 cm.

3. Filtre à combustible (1') selon la revendication 1, **caractérisé en ce que** la taille de la surface de section transversale de la partie de rétrécissement (14) correspond à la taille d'une surface circulaire dont le diamètre se situe dans une plage de 0,3 cm à 0,6 cm.

4. Filtre à combustible (1') selon la revendication 1, **caractérisé en ce que** la taille de la surface de section transversale de la partie de rétrécissement (14) correspond à la taille d'une surface circulaire dont le diamètre se situe dans une plage de 0,4 à 0,5 cm.

5. Filtre à combustible (1') selon l'une quelconque des revendications précédentes, **caractérisé en ce que** la partie de rétrécissement (14) s'étend sur toute la longueur du tuyau montant (12) traversée par le combustible.

6. Filtre à combustible (1') selon l'une quelconque des revendications précédentes, **caractérisé en ce que** la partie de rétrécissement (14) est formée par une sélection correspondante du diamètre intérieur d'au moins une partie de la longueur du tuyau montant (12).

7. Filtre à combustible (1') selon l'une quelconque des revendications 1 à 5, **caractérisé en ce que** la partie de rétrécissement est réalisée à l'aide d'un élément de rétrécissement inséré dans le tuyau montant (12).

8. Filtre à combustible (1') selon la revendication 7, **caractérisé en ce que** l'élément de rétrécissement est un tuyau de rétrécissement (15) inséré dans le tuyau montant (12), dont le diamètre extérieur est identique au diamètre intérieur du tuyau montant (12).
